# EUROPEAN PATENT SPECIFICATION

(11) **EP 2 775 648 B1**
(45) Date of publication and mention of the grant of the patent: **01.03.2017**
(21) Application number: 11866960.5
(22) Date of filing: 31.10.2011
(51) Int. Cl.: H04L 1/00

(54) **DATA SENDER, DATA RECEIVER AND FRAME SYNCHRONIZATION METHOD**
DATENSENDER, DATENEMPFÄNGER UND RAHMENSYNCHRONISIERUNGSVERFAHREN
DISPOSITIF DE TRANSMISSION DE DONNÉES, DISPOSITIF DE RÉCEPTION DE DONNÉES ET PROCÉDÉ DE SYNCHRONISATION DE TRAMES

(43) Date of publication of application: 10.09.2014
(73) Proprietor: Huawei Technologies Co., Ltd., Longgang District Shenzhen, Guangdong 518129 (CN)
(72) Inventor: YU, Fan, Shenzhen Guangdong 518129 (CN); CHANG, Deyuan, Shenzhen Guangdong 518129 (CN); XIAO, Zhiyu, Shenzhen Guangdong 518129 (CN)
(74) Representative: Epping - Hermann - Fischer
(86) International application number: PCT/CN2011/081552
(87) International publication number: WO 2012/163033

(56) References cited:
- EP-A1- 2 209 216
- CN-A- 101 233 715
- CN-A- 101 631 000
- CN-A- 102 035 616
- US-A1- 2010 008 678
- US-A1- 2010 050 056
- US-A1- 2011 110 470

## Description

### TECHNICAL FIELD

The present invention relates to the communications field, and in particular, to a data transmitter, a data receiver, and a frame synchronization method in the communications field.

### BACKGROUND

An optical transport network (OTN), based on wavelength division multiplexing technologies, of an optical layer organization network will be a next-generation backbone transport network. A single channel of an OTU4 (Optical channel Transport Unit 4) defined by the International Telecommunication Union-Telecommunication Standardization Sector transmits 112 Gbit data per second, and a forced out-of-band forward error correction (FEC) technology is used to improve the reliability of data transmission. The out-of-band FEC recommended by the OTU4 is a hard decision decoding FEC technology with a 7% overhead.

At a transmit end of an OTN system, an OTU framing module completes OTU4 framing and 7% FEC coding for data and sends an FEC code word to an optical module to perform data modulation. At a receive end, after being demodulated by the optical module, a signal from a channel is processed by an analog to digital converter (ADC), a digital signal processor (Digital Signal Processor, DSP), and the like, to obtain OTU4 frame data, and an OTU4 frame decoding module completes 7% FEC decoding and OTU4 frame decoding. At a medium access control layer of the system, an FEC code word and an OTU4 frame share a frame header. Therefore, after a signal is transmitted from a physical layer to the medium access control layer, the medium access control layer needs to first search for frame header information and then determine an FEC code word according to the frame header information and perform FEC decoding processing.

With the development of an optical transmission system, higher requirements are put forward for FEC technologies. Especially, the development of a 100 Gbps long-distance optical transmission system, compared with a 40 Gbps system, requires an increase of at least 4 dB in FEC gain performance. Therefore, a next-generation long-distance 100 Gbps optical transmission or higher-rate system will use a higher-performance FEC technology, such as a soft decision (Soft Decision, SD) FEC technology.

In a high-speed digital optical communication system, an SD FEC input is multi-bit quantized soft information, and therefore an interface rate of a DSP algorithm module will be doubled several times compared with a channel line rate. For example, if 4-bit quantized SD FEC is applied to a 100 Gbps optical transmission system, interface data rates of an SD FEC decoding module and a front-end DSP module will reach 400 Gbps. Therefore, the Optical Internetworking Forum organization recommends that an SD FEC decoder be deployed after a DSP algorithm module and integrated with the DSP module at an optical module end to implement FEC decoding at the physical layer.

If FEC decoding is processed at the physical layer, a manner of performing FEC decoding by searching for frame header information at the medium access control layer in the prior art is no longer applicable and cannot implement FEC decoding at the physical layer. In addition, high gain performance of SD FEC can enable a system to have a relatively high FEC performance limit (FEC limit), so that a forward bit error rate can reach 2.5e-2. However, if an OTU frame alignment mechanism is used, an average time for occurrence of frame loss is short, and the system is unstable.

Currently, to solve the FEC decoding problem at the physical layer, an additional FEC frame header is inserted into the head of each SD FEC code word, so as to implement frame alignment by using the additional FEC frame header. After receiving data, a decoder first searches for an additional FEC frame header, performs frame synchronization according to the FEC frame header, and then performs FEC decoding.

In a case where the FEC decoding is implemented at the physical layer, an FEC frame header needs to be inserted at the transmit end, which will occupy an additional overhead, resulting in an increase in a system line rate. Searching for a frame header to perform frame alignment is still required before FEC decoding at the receive end, and therefore a high-throughput system still requires a large amount of resources.

US 2010/008678 A1 discloses systems and methods for multi-channel ITU G.709 optical transport network (OTN) transmission and receiving. The transmission method accepts a canonical ITU G.709 OTN frame including an OTU overhead (OH) section, an ODU section, and a forward error correction (FEC) parity section. A training signal wrapper is added to the ITU G.709 OTN frame, and at least a portion of a training-enhanced (TE) OTN frame is buffered in a tangible memory medium in preparation for striping. The method stripes the training-enhanced OTN frame into n parallel streams to supply n TE_OTN-PFs (Parallel Frames) at an output.

### SUMMARY

Embodiments of the present invention provide a data transmitter, a data receiver, and a frame synchronization method, which may use an originally existing training sequence to implement frame synchronization for an FEC code word at a physical layer, thereby preventing frame synchronization from introducing an additional overhead and preventing a system line rate from increasing.

In one aspect, the present invention provides a data receiver, including a processing module and a decoding module, where: the processing module is configured to receive first receive data, acquire, according to a training sequence that is in the first receive data and for assisting in channel estimation or channel equalization, an indication signal that indicates a boundary position of the training sequence, and output second receive data obtained after the training sequence is removed from the first receive data and the indication signal to the decoding module, where the first receive data is obtained by a data transmitter by inserting, according to a boundary position of a forward error correction FEC code word, the training sequence into FEC coded data; and the decoding module is configured to determine a boundary position of an FEC code word in the second receive data according to the indication signal and perform FEC decoding on the FEC code word according to the boundary position. the decoding module comprises: a buffering unit, configured to buffer N continuous data blocks if training sequences of N cycles are inserted into one FEC code word, wherein data comprised in one data block is a part between positions indicated by adjacent indication signals in the second receive data; a decoding unit, configured to perform FEC decoding on the N continuous data blocks; a checking unit, configured to check whether a result obtained from the FEC decoding is correct; and a determining unit, configured to determine, if a check result obtained by the checking unit is correct, that a position indicated by a first indication signal corresponding to the N continuous data blocks is the boundary position of the FEC code word in the second receive data, wherein the N is an integer greater than 1.

In another aspect, the present invention provides a frame synchronization method, including: acquiring, according to a training sequence that is in first receive data and for assisting in channel estimation or channel equalization, a boundary position of the training sequence, where the first receive data is obtained by a data transmitter by inserting, according to a boundary position of a forward error correction FEC code word, the training sequence into FEC coded data; determining a boundary position of an FEC code word in second receive data according to the boundary position of the training sequence, where the second receive data is obtained after the training sequence is removed from the first receive data; and performing FEC decoding on the FEC code word according to the boundary position of the FEC code word. The determining a boundary position of an FEC code word in second receive data according to the boundary position of the training sequence comprises: buffering N continuous data blocks if training sequences of N cycles are inserted into one FEC code word, wherein data comprised in one data block is a part between positions indicated by adjacent indication signals in the second receive data; performing FEC decoding on the N continuous data blocks; checking whether a result obtained from the FEC decoding is correct; and determining, if a check result is correct, that a boundary position of a first training sequence corresponding to the N continuous data blocks is the boundary position of the FEC code word in the second receive data, wherein the N is an integer greater than 1.

According to the technical solutions, a training sequence is inserted into an FEC code word, and the training sequence may be used to implement frame synchronization for the FEC code word. A training sequence is originally used in the prior art to assist in channel equalization and the like, and in the embodiments of the present invention, the originally existing training sequence is used to perform frame synchronization. In this way, no additional FEC frame header needs to be inserted. Therefore, an additional overhead may be reduced, the usage efficiency of the training sequence may be improved, and a system line rate will not increase.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person skilled in the art may still derive other drawings from these accompanying drawings without creative efforts.
FIG. 1 is a structural block diagram of a data transmitter according to an embodiment of the present invention;
FIG. 2 is a structural block diagram of a data receiver according to an embodiment of the present invention;
FIG. 3 is a schematic diagram of a first embodiment of a system including a data transmitter and a data receiver;
FIG. 4 is a schematic diagram of an FEC code word and an FEC code word with a training sequence inserted according to a first embodiment;
FIG. 5 is a schematic diagram of a second embodiment of a system including a data transmitter and a data receiver;
FIG. 6 is a schematic diagram of a third embodiment of a system including a data transmitter and a data receiver;
FIG. 7 is a schematic diagram of an FEC code word and an FEC code word with a training sequence inserted according to a third embodiment;
FIG. 8 is a flowchart of a frame synchronization method according to an embodiment of the present invention; and
FIG. 9 is a flowchart of another frame synchronization method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person skilled in the art based on the embodiments of the present invention without creative efforts shall fall within the protection scope of the present invention.

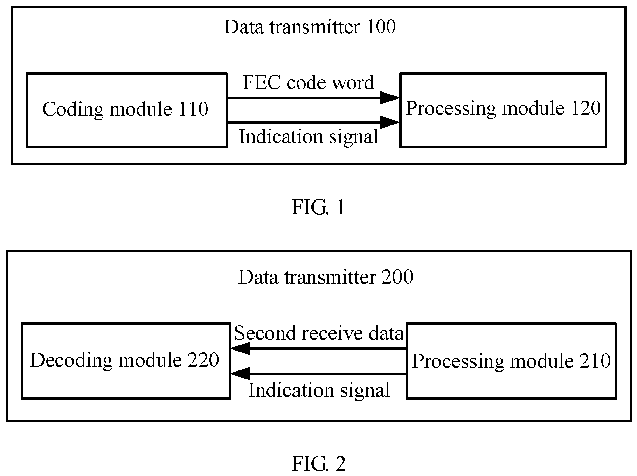

The following first describes a structural block diagram of a data transmitter 100 according to an embodiment of the present invention with reference to FIG. 1.

As shown in FIG. 1, the data transmitter 100 includes a coding module 110 and a processing module 120. The coding module 110 is configured to perform FEC coding on sent data to obtain an FEC code word, and output the FEC code word and an indication signal for indicating a boundary position of the FEC code word to the processing module 120. The processing module 120 is configured to insert a training sequence into the FEC code word according to the indication signal, so that a data receiver determines the boundary position of the FEC code word according to the training sequence.

The coding module 110 simultaneously outputs a FEC code word obtained through coding and the indication signal that indicates the boundary position of the FEC code word to the processing module 120, so that the processing module 120 may determine the boundary position of the FEC code word according to the indication signal and insert the training sequence according to the boundary position of the FEC code word. The inserted training sequence originally needs to be inserted into the FEC code word to assist in channel estimation, channel equalization, and the like. In the embodiment of the present invention, a manner of inserting the training sequence is changed to enable the training sequence to help performing frame synchronization, thereby improving the usage efficiency of the training sequence. Inserting the training sequence according to the indication signal prevents the problem that a system line rate increases due to inserting of an additional FEC frame header in the prior art. In addition, due to improved usage of the training sequence, no additional overhead is added to a system, system performance may be improved, and a high-throughput system is prevented from consuming a large amount of resources to implement frame synchronization at a physical layer.

The FEC coding performed by the coding module 110 may be hard decision FEC coding or soft decision FEC coding, and the FEC coding is implemented at the physical layer. The boundary position of the FEC code word indicated by the indication signal may be a start position of the FEC code word or an end position of the FEC code word. Data included in one FEC code word may be determined according to a boundary position. For example, if the length of an FEC code word is known, FEC code word data may be directly obtained after a boundary position is determined; and if the length of an FEC code word is variable or unknown, a part between two adjacent indication signals is data of one FEC code word.

According to the length of an FEC code word and the length of a training sequence cycle, a training sequence may be inserted in multiple manners. The inserted training sequence can help a receive end to acquire an indication signal that indicates a boundary position of the FEC code word. Training sequence data inserted into one FEC code word may be training sequence data of one cycle or training sequence data of multiple cycles. It is also possible that training sequence data of one cycle is inserted into multiple FEC code words. Due to a difference in manners of transmitting FEC code words in physical channels, it is possible that a training sequence inserted into one FEC code word is inserted into multiple physical channels simultaneously.

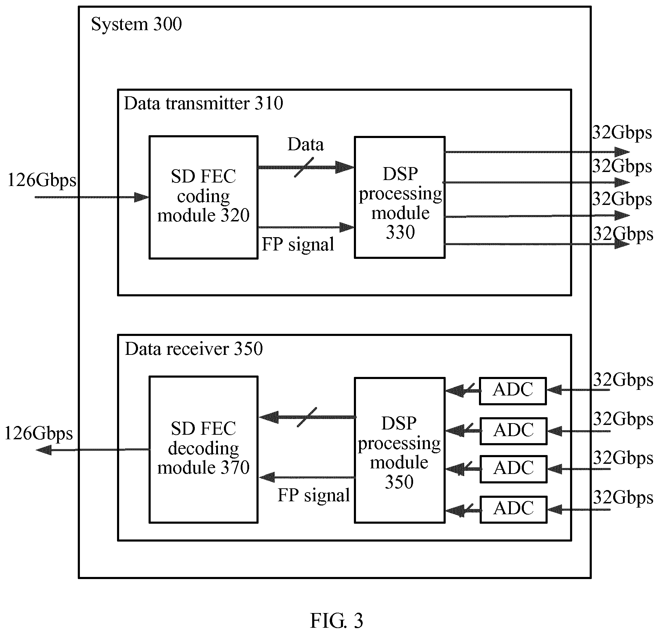

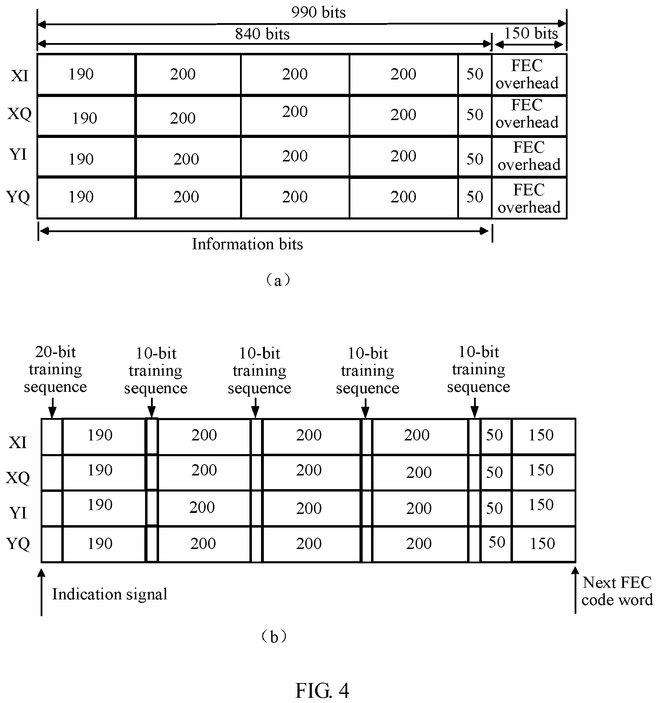

According to an embodiment of the present invention, the processing module 120 may be configured to insert, in a case where an FEC code word is transmitted in parallel through at least two physical channels, a training sequence into the FEC code word in alignment according to an indication signal. For details, reference may be made to the description about FIG. 3 and FIG. 4.

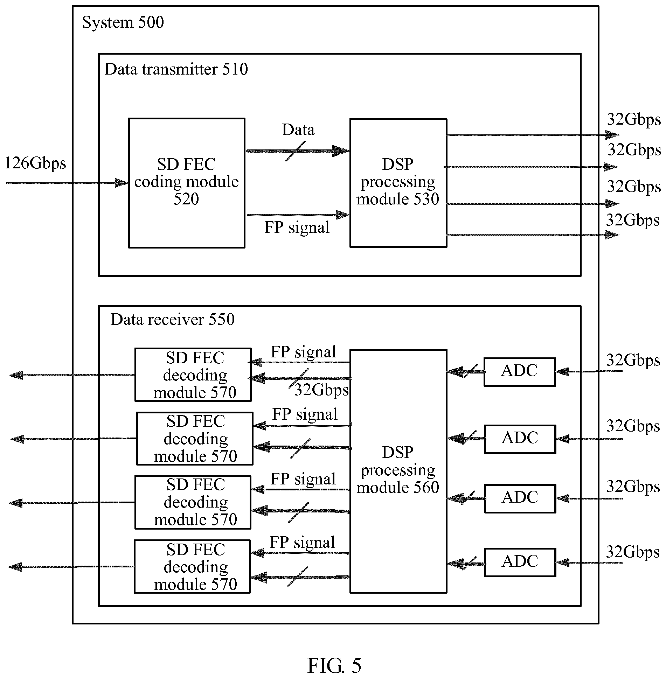

According to an embodiment of the present invention, the processing module 120 may be configured to align, in a case where an FEC code word is serially transmitted through one of at least two physical channels of the processing module 120, the FEC code word with another FEC code word that is transmitted through another physical channel in the at least two physical channels, insert a training sequence into the FEC code word according to an indication signal, and insert, in alignment with the training sequence, another training sequence into the another FEC code word. In this case, the training sequence inserted into the FEC code word and the another training sequence inserted into the another FEC code word constitute training sequence data of one cycle, or may constitute training sequence data of multiple cycles. For details, reference may be made to the description about FIG. 5.

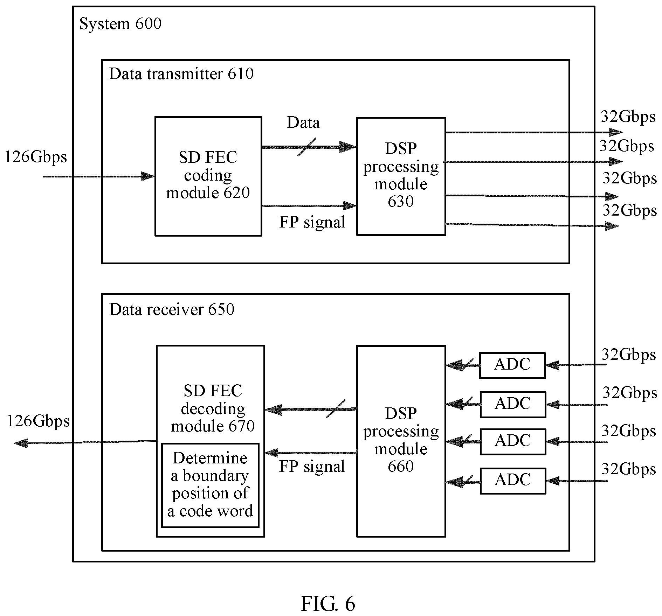

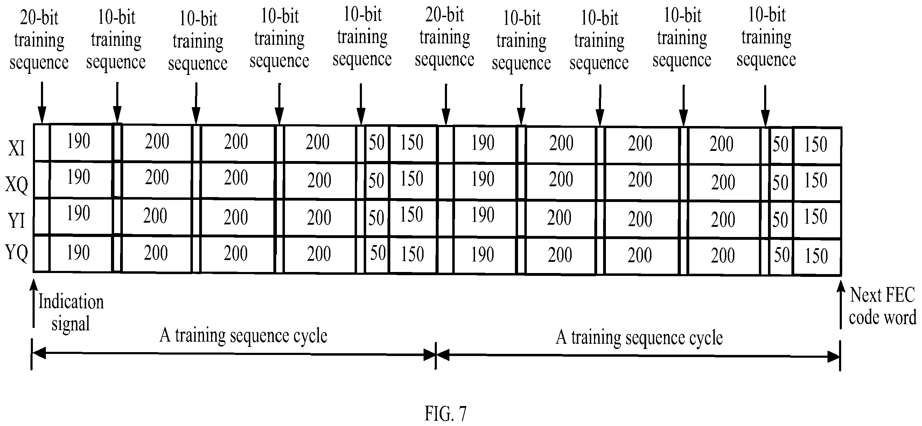

According to the embodiment of the present invention, regardless of whether an FEC code word is transmitted through one physical channel or multiple physical channels, training sequences of an integral number of cycles may be inserted into one FEC code word. For an example where training sequences of multiple cycles are inserted into one FEC code word, reference may be made to the description about FIG. 6 and FIG. 7.

Matching a length cycle of an FEC code word with a cycle of a training sequence, that is, making one FEC code word include training sequences of an integral number of cycles, allows a receive end to acquire a boundary position of the FEC code word according to the training sequences.

The following subsequently describes a structural block diagram of a data receiver 200 according to an embodiment of the present invention with reference to FIG. 2.

As shown in FIG. 2, the data receiver 200 includes a processing module 210 and a decoding module 220. The processing module 210 is configured to receive first receive data, acquire, according to a training sequence in the first receive data, an indication signal that indicates a boundary position of the training sequence, and output second receive data obtained after the training sequence is removed from the first receive data and the indication signal to the decoding module 220, where the first receive data is obtained by a data transmitter by inserting, according to a boundary position of a forward error correction FEC code word, the training sequence into FEC coded data. The decoding module 220 is configured to determine a boundary position of an FEC code word in the second receive data according to the indication signal and perform FEC decoding on the FEC code word according to the boundary position.

The first receive data received by the receiver 200 includes the training sequence that is inserted into the FEC code word by the data transmitter according to the boundary position of the FEC code word. The processing module 210 may acquire the boundary position of the training sequence according to the training sequence in the first receive data, where the boundary position of the training sequence is related to the boundary position of the FEC code word. Then, the decoding module 220 determines the boundary position of the FEC code word according to the indication signal. In addition, the second receive data including the FEC code word may be obtained after the training sequence is removed from the first receive data. The processing module 210 sends the second receive data and the indication signal to the decoding module 220, so that the decoding module 220 may determine the FEC code word in the second receive data according to the indication signal and then may perform SD FEC decoding on the FEC code word.

Because a training sequence that originally needs to be inserted into the FEC code word to assist in channel estimation, channel equalization, and the like is used by the data receiver 200 to determine the boundary position of the FEC code word, the training sequence may not only provide a function in the prior art, but also may help performing frame synchronization of the FEC code word, thereby improving the usage efficiency of the training sequence. In addition, because the boundary position of the FEC code word may be acquired according to the training sequence, a problem that a system line rate increases due to an additional FEC frame header used in the prior art does not occur. In addition, due to improved usage of the training sequence, no additional overhead is added to a system, system performance may be improved, and a high-throughput system is prevented from consuming a large amount of resources to implement frame synchronization at a physical layer.

According to the embodiment of the present invention, the processing module 210 may perform a relevant calculation to acquire the indication signal according to the training sequence. The processing module 210 may be configured to perform a self-correlation or cross-correlation calculation according to the training sequence and acquire the indication signal according to a calculation result.

For example, in a cross-correlation calculation, the data receiver 200 may locally generate a local training sequence that is the same as the training sequence inserted by the transmitter, use the local training sequence to traverse the first receive data to perform a relevant calculation, and when a correlation peak occurs, determine that the boundary position of the training sequence is found, thereby acquiring the indication signal. In a self-correlation calculation, the data receiver 200 may perform a self-correlation calculation on the first receive data according to a feature of the training sequence itself, and when a correlation peak occurs, determine that the boundary position of the training sequence is found, thereby acquiring the indication signal, where the boundary position of the training sequence may be a start position of the training sequence.

After the processing module 210 acquires the indication signal according to the training sequence, the decoding module 220 is capable of determining the boundary position of the FEC code word according to the indication signal in multiple manners. A manner for the decoding module 220 to determine the boundary position of the FEC code word may be related to the number of cycles of training sequences inserted into one FEC code word.

According to an embodiment of the present invention, the decoding module 220 may be configured to determine, if training sequences of one cycle are inserted into one FEC code word, that a position indicated by an indication signal is the boundary position of the FEC code word in the second receive data. For details, reference may be made to the description about FIG. 3 and FIG. 5.

According to an embodiment of the present invention, the decoding module 220 may include a buffering unit, a decoding unit, a checking unit, and a determining unit. The buffering unit is configured to buffer N continuous data blocks if training sequences of N cycles are inserted into one FEC code word, where data included in one data block is a part between positions indicated by adjacent indication signals in the second receive data. The decoding unit is configured to perform FEC decoding on the N continuous data blocks. The checking unit is configured to check whether a result obtained from the FEC decoding is correct. The determining unit is configured to determine, if a check result obtained by the checking unit is correct, that a position indicated by a first indication signal corresponding to the N continuous data blocks is the boundary position of the FEC code word in the second receive data, where N is an integer greater than 1. For details, reference may be made to the description about FIG. 6 and FIG. 7.

For example, a data window may be set, and data for FEC decoding is selected from the buffering unit through the data window. The length of the window is the same as the length of an FEC code word, that is, the length of the N cycles of training sequences inserted into one FEC code word. A start position of the window is determined according to an indication signal, and the start position of the window overlaps a certain indication signal each time data is selected through the window. When a window sliding operation is performed, the window is moved backward by an indication signal position, and its start position overlaps a next indication signal.

Data between positions indicated by two adjacent indication signals in the second receive data may be referred to as a data block, one data block corresponds to one training sequence cycle, and training sequences of one cycle are inserted into one data clock. The length of the window includes training sequences of N cycles. Therefore, the window includes N data blocks, and N data blocks may be selected from the window each time. If the N data blocks correspond to one FEC code word, FEC decoding of the N data blocks is correct; otherwise, the FEC decoding is incorrect. If the FEC decoding is incorrect, the window needs to be slid backward to select new data blocks for FEC decoding, so as to determine whether the new data blocks constitute one FEC code word according an FEC decoding result. Therefore, according to an embodiment of the present invention, the decoding module 220 may further include a window sliding unit, configured to select, if the check result obtained by the checking unit is incorrect, N new continuous data blocks through window sliding, and output the N new continuous data blocks to the decoding unit, so that the decoding unit performs FEC decoding on the N new continuous data blocks and the checking unit checks whether a result of the FEC decoding is correct.

For example, if N is 3, it indicates that training sequences of three cycles are inserted into one FEC code word, and three data blocks are selected from the window for FEC decoding each time. If the decoding of the three selected data blocks is incorrect when the start position of the window overlaps a first indication signal, it indicates that the first indication signal does not indicate a start position of an FEC code word. Then, a window sliding operation is performed to allow the start position of the window to overlap a second indication signal. If the decoding of the three newly selected data blocks is correct when the start position of the window overlaps the second indication signal, it indicates that the second indication signal indicates the start position of the FEC code word.

In a case where training sequences of N cycles are inserted into one FEC code word, if the decoding module 220 has determined an indication signal that indicates a boundary position of the FEC code word, a boundary position of another FEC code word may be directly obtained according to the number N of cycles, and the decoding module 220 does not need to again determine, according to a check result, which indication signal corresponds to the boundary position of the FEC code word. Therefore, according to an embodiment of the present invention, the decoding module 220 may further be configured to determine, in a case where an indication signal that indicates a boundary position of an FEC code word in the second receive data has been determined, that a position indicated by an indication signal that is separated from the indication signal by M×N+N-1 indication signals is a boundary position of another FEC code word in the second receive data, where M is an integer not less than 0. For details, reference may be made to the description about FIG. 6 and FIG. 7.

The following describes relevant operations of a transmitter and a receiver with reference to specific embodiments. First, a first embodiment about performing frame synchronization by using a training sequence is described with reference to FIG. 3 and FIG. 4.

In a system 300 including a data transmitter 310 and a data receiver 350 shown in FIG. 3, the system 300 uses coherent DP-QPSK (Dual Polarization Quaternary Phase Shift keying, dual polarization quaternary phase shift keying) modulation, and 126 Gbps data is transmitted through four physical channels XI, XQ, YI, and YQ, where one training sequence cycle in the four physical channels corresponds to one SD FEC code word, so that the length of the SD FEC code word matches the length of the training sequence cycle. If the system 300 is a higher order modulation system, for example, DP-16QAM, one SD FEC code word is transmitted through eight physical channels, and one training sequence cycle in the eight physical channels corresponds to one SD FEC code word.

In the data transmitter 310, an SD FEC coding module 320 treats OTU4 data from an OTU framing module as an SD FEC load part and performs SD FEC coding on the OTU4 data. After the coding, the SD FEC coding module 320 outputs the coded data and an indication signal that indicates a boundary position of an FEC code word obtained after the coding to a DSP (Digital Signal Processing, digital signal processing) processing module 330. The indication signal may be expressed by using an FP (Frame Pointer, frame pointer) signal, and the FP signal may be a single-bit signal for indicating a frame header position of the SD FEC code word.

After entering the DSP processing module 330, an FEC code word is distributed to four physical channels for transmission. The DSP processing module 330 not only needs to insert a training sequence according to the manner of the embodiment of the present invention, but also needs to implement other functions, such as modulation precoding, according to the prior art.

Part (a) of FIG.4 shows one FEC code word transmitted through four physical channels. A row represents data transmitted through a physical channel. Of 990 bits shown in part (a) of FIG. 4, 840 bits are an information bit length, and 150 bits are an FEC overhead. Therefore, the information bit length of one SD FEC code word is 840×4 bits, the FEC overhead is 150×4 bits, the total code word length is 990×4 bits, and training sequences need to be inserted into the 990×4 bits.

The DSP processing module 330 starts inserting a training sequence at a boundary position of the FEC code word according to the FP signal. Part (b) of FIG. 4 shows the inserted training sequence. In this embodiment, training sequences inserted into one code word are data in one training sequence cycle. Definitely, a person skilled in the art may also think of that data in an integral number of training sequence cycles may also be inserted into one code word.

As shown in part (b) of FIG. 4, the training sequence cycle is composed of one master part and four slave parts, and the length of the master part and that of the slave part are both 210 bits; for the master part, the length of a training sequence thereof is 20 bits, and the length of the data bit thereof is 190 bits; for the slave part, the length of a training sequence thereof is 10 bits, and the length of the data bit thereof is 200 bits, and data bits of the last slave part are composed of 50-bit OTU4 data and a 150-bit FEC overhead. The length of an SD FEC code word matches a training sequence cycle of the four physical channels. Therefore, a start position of the training sequence in the four physical channels is consistent with a frame header position of an SD FEC code word, and a start position of the SD FEC code word is found if the start position of the training sequence is acquired.

In this embodiment, FEC code word length data and training sequence length data are only an example, a manner of inserting a training sequence into an FEC code word is also an example only, and both of them do not constitute any limitation on an implementation manner of the present invention.

As described above, the DSP processing module 330 processes, according to a system modulation manner, an FEC code word into data of multiple physical channels, for example, four physical channels under DP-QPSK modulation, inserts a training sequence into the FEC code word according to an FP signal, and then sends the processed multi-channel low-speed data to an optical module. The optical module sends a signal to a receive end according to a processing manner in the prior art.

In the receiver 350, an analog-to-digital converter (Analog-to-Digital, ADC) module of the four physical channels performs analog-to-digital conversion on received data, and then a DSP processing module 360 performs digital signal processing. A signal on which DSP processing is performed is sent to an SD FEC decoding module 370 for decoding.

In addition to an interface for transmitting an FEC code word, interfaces between the DSP processing module 360 and the SD FEC decoding module 370 further include a single-bit FP signal interface for transmitting an FP signal. The DSP processing module 360 may indicate a boundary position of a training sequence for the SD FEC decoding module 370 through the FP signal, thereby helping the SD FEC decoding module 370 to determine a boundary position of the FEC code word. The DSP processing module 360 not only needs to acquire, according to the manner of the embodiment of the present invention, a signal that indicates a boundary position of a training sequence, but also needs to implement other functions, such as digital signal processing, according to the prior art.

Specifically, in the data receiver 350, the DSP processing module 360 receives signals from multiple physical channels and performs, according to a training sequence, frame synchronization alignment on the signals by using a self-correlation/cross-correlation symbol synchronization algorithm, so as to obtain an FP signal for indicating a boundary position of the training sequence cycle. In this embodiment, training sequences of one cycle are inserted into one FEC code word, and therefore the FP signal indicates a frame header of the FEC code word. After completing signal processing, the DSP processing module 360 sends the FP signal and a data signal in parallel to the SD FEC decoding module 370. The SD FEC decoding module 370 obtains frame boundary information, that is, performs framing, according to the FP signal and performs FEC decoding.

Next, a second embodiment in which frame synchronization is performed by using a training sequence is described with reference to FIG. 5.

The second embodiment is basically the same as the first embodiment, and differences are as follows: 1. The length of an FEC code word in the second embodiment is shorter and data in one training sequence cycle on each physical channel corresponds to a complete FEC code word, while the length of an FEC code word in the first embodiment is longer and data in the training sequence cycle in four physical channels corresponds to a complete FEC code word; and 2. A data receiver in the second embodiment performs FEC decoding on data of each physical channel separately, while a data receiver in the first embodiment performs FEC decoding after combining data of the four physical channels.

In a data transmitter 510 of a system 500, an SD FEC coding module 520 performs SD FEC coding on OTU4 data from an OTU framing module, and then sends an FEC code word obtained after the SD FEC coding and an FP signal for indicating a frame header of the FEC code word in parallel to a DSP processing module 530. The DSP processing module 530 transmits each FEC code word obtained from the SD FEC coding module 520 through one of four physical channels XI, XQ, YI, and YQ. In this way, four FEC code words are transmitted in parallel on the four physical channels. The DSP processing module 530 aligns SD FEC code words to be sent on the four physical channels and inserts, according to the FP signal, training sequences into the four FEC code words that are transmitted on the four physical channels.

The four FEC code words that are transmitted on the four physical channels may be as shown in part (a) of FIG. 4, but each FEC code word in the second embodiment corresponds to one channel. Four FEC code words with training sequences inserted may be as shown in part (b) of FIG. 4, but data in one training sequence cycle in the second embodiment is inserted into four FEC code words; however, for each physical channel, one FEC code word still includes only one cycle of training sequences. In the second embodiment, data in one training sequence cycle is inserted into four FEC code words on four physical channels; however, a person skilled in the art may also think of that data in a positive integral number of training sequence cycles may be inserted into four FEC code words on four physical channels.

In a data receiver 550 of the system 500, a DSP processing module 560 may perform, according to a training sequence, frame synchronization alignment by using a self-correlation/cross-correlation symbol synchronization algorithm for signals received from multiple physical channels, so as to obtain an FP signal that indicates a boundary position of a training sequence cycle, that is, a frame header signal of an FEC code word in this example. After completing signal processing, the DSP processing module 560 sends the FP signal and a data signal of each physical channel in parallel to four SD FEC decoding modules 570, and a data signal of one physical channel corresponds to one SD FEC decoding module. Each SD FEC decoding module 570 obtains frame boundary information of a code word in a corresponding physical channel according to an FP signal and performs FEC decoding separately.

A third embodiment in which frame synchronization is performed by using a training sequence is described below with reference to FIG. 6 and FIG. 7.

The third embodiment is basically the same as the first embodiment, and differences are as follows: 1. An SD FEC code word in the third embodiment is a long code and data of at least two training sequence cycles is inserted into one FEC code word, while data of one training sequence cycle is inserted into one FEC code word in the first embodiment; and 2. One FEC code word in the third embodiment has multiple training sequence cycles and therefore an SD FEC decoding module needs to determine a frame header of an FEC code word according to the FP signal, while one FEC code word in the first embodiment has only one training sequence cycle and therefore the SD FEC decoding module directly uses the FP signal as an indication signal that indicates a frame header of the FEC code word.

In a data transmitter 610 of a system 600, an SD FEC coding module 620 sends a coded FEC code word and an FP signal that indicates a frame header of the FEC code word in parallel to a DSP processing module 630. In the DSP processing module 630, each SD FEC code word is transmitted through four physical channels XI, XQ, YI, and YQ, SD FEC code words to be sent through the four physical channels are aligned, and data in at least two training sequence cycles is inserted into each FEC code word. In this way, data in one training sequence cycle corresponds to a sub-block of one FEC code word, where the sub-block may also be referred to as a data block.

It is assumed that data in two training sequence cycles is inserted into one FEC code word, so an SD FEC code word with training sequences inserted is shown in FIG. 7. Training sequences are shown in FIG. 7. The DSP processing module 630 starts inserting data in two training sequence cycles from a frame header of the FEC code word according to the FP signal.

In a data receiver 650 of the system 600, a DSP processing module 660 obtains, according to a training sequence, an FP signal that indicates a boundary position of a training sequence cycle by using a self-correlation/cross-correlation symbol synchronization algorithm. After completing signal processing, the DSP processing module 660 sends the FP signal and a data signal in parallel to the SD FEC decoding module 670.

In the third embodiment, data in multiple training sequence cycles is inserted into one FEC code word, and therefore the SD FEC decoding module 670 needs to determine a frame header of the FEC code word according to the FP signal.

The SD FEC decoding module 670 may determine a boundary position of an FEC code word by performing the following operations: a) Buffer a sub-block of a received FEC code word, determine one sub-block by using an FP signal, and sequentially select N code word sub-blocks for decoding, where N is the number of cycles of training sequences inserted into one FEC code word; b) check decoded code word bits by using a check matrix, for example, perform a code word multiplication operation according to an H matrix; c) if a check result is 0, consider that the code word decoding is correct and the N code word sub-blocks are a complete FEC code word; and if the check result is not 0, successively "slide a window" backward to select N code word sub-blocks and return to step b).

After the SD FEC decoding module 670 has determined an FP signal for indicating a frame header of the FEC code word, the SD FEC decoding module 670 may directly determine the frame header of the FEC code word according to the FP signal, without the need of performing the preceding manner to determine a complete FEC code word. Specifically, after the SD FEC decoding module 670 finds a frame header of one FEC code word, an FP signal that is separated from an FP signal indicating the frame header by M×N+N-1 FP signals indicates a frame header position of one FEC code word. For example, it is assumed that data in three training sequence cycles is inserted into one FEC code word. When the SD FEC decoding module 670 determines that a fifth FP signal indicates a frame header of the FEC code word, the SD FEC decoding module 670 may directly determine that an FP signal that is separated from the fifth FP signal by 2, 5, 8, or the like FP signals indicates a frame header of the FEC code word, that is, an eighth, eleventh, fourteenth, or the like FP signal indicates frame headers of FEC code words.

The SD FEC decoding module 670 may obtain frame boundary information of each sub-block according to the FP signal, and then may obtain a frame header of an FEC code word in a checking manner. In this way, FEC decoding may be performed on a determined FEC code word. Generally, initialization may be performed when the system 600 is powered on, so as to obtain an FP signal that indicates a frame header of an FEC code word.

According to the data transmitter or the data receiver provided in the embodiment of the present invention, an inserting manner of a training sequence that will originally be inserted into an FEC code word is changed in an FEC code word, so that the training sequence may not only implement an existing function, but also help performing frame synchronization of the FEC code word. In this way, frame synchronization of the SD FEC code word may be implemented without adding an additional FEC framing overhead, and a combination degree of the system is better, so a training sequence in a DSP algorithm may be fully used. In addition, inserting a training sequence to help implementing frame synchronization is simple with low complexity and may support frame alignment in a case where a bit error rate is high, for example, 2e-2.

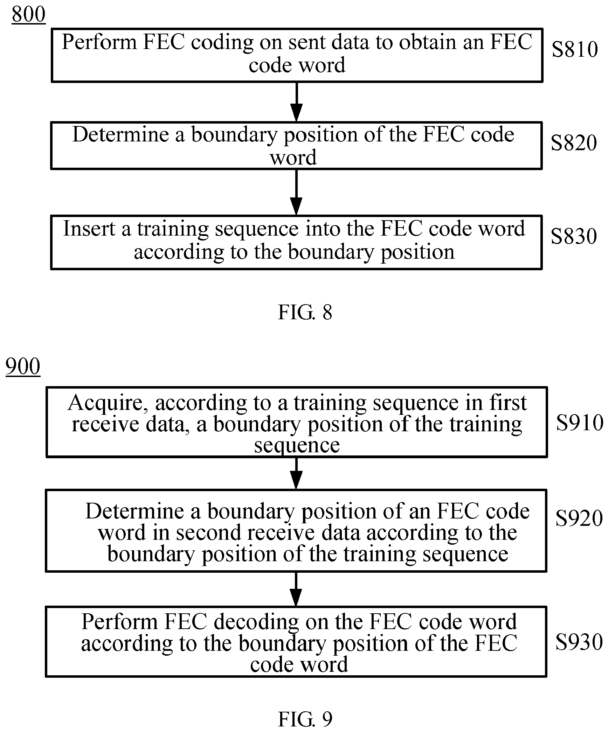

The above describes a data transmitter and a data receiver that are required for implementing frame synchronization by using a training sequence, and the following describes a flowchart of a frame synchronization method according to an embodiment of the present invention with reference to FIG. 8 and FIG. 9.

As shown in FIG. 8, a frame synchronization method 800 includes the following steps:
S810: Perform FEC coding on sent data to obtain an FEC code word.
S820: Determine a boundary position of the FEC code word.
S830: Insert a training sequence into the FEC code word according to the boundary position, so that a data receiver determines the boundary position of the FEC code word according to the training sequence.

For operations of S810 to S830, reference may be made to the operations of the coding module 110 and processing module 120 included in the data transmitter 100 in FIG. 1. To avoid repetition, no further details are provided herein.

According to an embodiment of the present invention, in S830, in a case where an FEC code word is transmitted in parallel through at least two physical channels, a training sequence is inserted into the FEC code word in alignment according to a boundary position. For a relevant example, reference may be made to the description about FIG. 3 and FIG. 4.

According to an embodiment of the present invention, in S830, in a case where an FEC code word is serially transmitted through one of at least two physical channels, the FEC code word may be aligned with another FEC code word that is transmitted through another physical channel in the at least two physical channels, a training sequence may be inserted into the FEC code word according to a boundary position, and another training sequence may be inserted, in alignment with the training sequence, into the another FEC code word. For a relevant example, reference may be made to the description about FIG. 5.

According to the embodiment of the present invention, in S830, training sequences of N cycles may be inserted into the FEC code word according to the boundary position, where N is an integer greater than 0. For a relevant example, reference may be made to the description about FIG. 6 and FIG. 7.

According to the frame synchronization method provided in the embodiment of the present invention, a training sequence that will originally be inserted into an FEC code word is inserted according to an indication signal to help implementing frame synchronization. In this way, the problem that a system line rate increases due to inserting of an additional FEC frame header in the prior art is prevented; in addition, due to improved usage of the training sequence, no additional overhead is added to a system, system performance may be improved, and a high-throughput system is prevented from consuming a large amount of resources to implement frame synchronization at a physical layer.

The method 800 in FIG. 8 is a frame synchronization method described from the view of a transmit end, and the following describes a frame synchronization method from the view of a receive end with reference to FIG. 9.

As shown in FIG. 9, a frame synchronization method 900 includes the following steps:
S910: According to a training sequence in first receive data, acquire a boundary position of the training sequence, where the first receive data is obtained by a data transmitter by inserting, according to a boundary position of an FEC code word, the training sequence into FEC coded data.
S920: Determine a boundary position of an FEC code word in second receive data according to the boundary position of the training sequence, where the second receive data is obtained after the training sequence is removed from the first receive data
S930: Perform FEC decoding on the FEC code word according to the boundary position of the FEC code word.

For operations of S910 to S930, reference may be made to the operations of the processing module 210 and decoding module 220 included in the data receiver 200 in FIG. 2. To avoid repetition, no further details are provided herein.

According to an embodiment of the present invention, in S920, if training sequences of one cycle are inserted into one FEC code word, a boundary position of a training sequence may be determined as a boundary position of an FEC code word in second receive data. For a relevant example, reference may be made to the description about FIG. 3, FIG. 4, and FIG. 5.

According to the embodiment of the present invention, in S930, if training sequences of N cycles are inserted into one FEC code word, N continuous data blocks may be buffered, and data included in one data block is a part between positions indicated by adjacent indication signals in the second receive data; FEC decoding is performed on the N continuous data blocks; whether a result obtained from the FEC decoding is correct is checked; if the check result is correct, a boundary position of a first training sequence corresponding to the N continuous data blocks is determined as a boundary position of an FEC code word in the second receive data, where N is an integer greater than 1.

If the check result is incorrect, N new continuous data blocks are selected through window sliding, FEC decoding is performed on the N new continuous data blocks and whether a result of the FEC decoding is correct is checked.

Then, in a case where a boundary position of a training sequence corresponding to a boundary position of an FEC code word is determined, a boundary position that is separated from the boundary position of the training sequence by training sequences of M×N+N-1 cycles may be determined as a boundary position of another FEC code word in the second receive data, where M is an integer not less than 0. For a relevant example, reference may be made to the description about FIG. 6 and FIG. 7.

According to an embodiment of the present invention, in S910, a self-correlation or cross-correlation calculation may be performed according to a training sequence, and an indication signal is acquired according to a calculation result.

According to the frame synchronization method provided in the embodiment of the present invention, an indication signal is acquired according to a training sequence inserted into an FEC code word, thereby determining a boundary position of the FEC code word and implementing frame synchronization. In this way, the problem that a system line rate increases due to inserting of an additional FEC frame header in the prior art is prevented; in addition, due to improved usage of the training sequence, no additional overhead is added to a system, system performance may be improved, and a high-throughput system is prevented from consuming a large amount of resources to implement frame synchronization at a physical layer.

A person skilled in the art may be aware that, in combination with the methods described in the embodiments disclosed in this specification, the steps and units may be implemented by electronic hardware, computer software, or a combination thereof. To clearly describe the interchangeability between the hardware and the software, the foregoing has generally described compositions and steps of every embodiment according to functions. Whether these functions are performed in a mode of hardware or software depends on particular applications and design constraint conditions of the technical solutions. A person skilled in the art may use different methods to implement the described functions for each particular application, but it should not be considered that the implementation goes beyond the scope of the present invention.

The steps of the methods described in combination with the embodiments herein may be implemented using hardware, a software program executed by a processor, or the combination thereof. The software program may be placed in a random access memory (RAM), a memory, a read-only memory (ROM), an electrically programmable ROM, an electrically erasable programmable ROM, a register, a hard disk, a removable magnetic disk, a CD-ROM, or a storage medium of any other form well-known in the technical field.

Although some embodiments of the present invention have been shown and described, a person skilled in the art should understand that various modifications may be made for these embodiments without departing from the principle of the present invention and such modifications shall fall within the scope of the present invention.

## Claims

1. A data receiver (200, 350, 570, 650), comprising a processing module (210, 360, 560, 660) and decoding module (220, 370, 570, 670), wherein:
the processing module (210, 360, 560, 660) is configured to receive first receive data, acquire, according to a training sequence that is in the first receive data and for assisting in channel estimation or channel equalization, an indication signal that indicates a boundary position of the training sequence, and output second receive data obtained after the training sequence is removed from the first receive data and the indication signal to the decoding module (220, 370, 570, 670), wherein the first receive data is obtained by a data transmitter (100, 310, 510, 610) by inserting, according to a boundary position of a forward error correction, FEC, code word, the training sequence into FEC coded data; and
the decoding module (220) is configured to determine a boundary position of an FEC code word in the second receive data according to the indication signal and perform FEC decoding on the FEC code word according to the boundary position, wherein the decoding module (220, 370, 570, 670) comprises:
a buffering unit, configured to buffer N continuous data blocks if training sequences of N cycles are inserted into one FEC code word, wherein data comprised in one data block is a part between positions indicated by adjacent indication signals in the second receive data;
a decoding unit, configured to perform FEC decoding on the N continuous data blocks;
a checking unit, configured to check whether a result obtained from the FEC decoding is correct; and
a determining unit, configured to determine, if a check result obtained by the checking unit is correct, that a position indicated by a first indication signal corresponding to the N continuous data blocks is the boundary position of the FEC code word in the second receive data, wherein the N is an integer greater than 1.

2. The data receiver (200, 350, 570, 650) according to claim 1, wherein the decoding module (220, 370, 570, 670) is configured to determine, if training sequences of one cycle are inserted into one FEC code word, that a position indicated by the indication signal is the boundary position of the FEC code word in the second receive data.

3. The data receiver (200, 350, 570, 650) according to claim 1, wherein the decoding module (220, 370, 570, 670) further comprises:
a window sliding unit, configured to select, if the check result obtained by the checking unit is incorrect, N new continuous data blocks through window sliding, and output the N new continuous data blocks to the decoding unit, so that the decoding unit performs FEC decoding on the N new continuous data blocks and the checking unit checks whether a result of the FEC decoding is correct.

4. The data receiver (200, 350, 570, 650) according to claim 1, wherein the decoding module (220, 370, 570, 670) is configured to determine that an indication signal separated from the first indication signal by M×N+N-1 indication signals indicates a boundary position of another FEC code word in the second receive data, wherein M is an integer not less than 0.

5. The data receiver (200, 350, 570, 650) according to any one of claims 1 to 4, wherein the processing module (210, 360, 560, 660) is configured to perform a self-correlation or cross-correlation calculation according to the training sequence and acquire the indication signal according to a calculation result.

6. A frame synchronization method, comprising:
receiving first receive data;
acquiring (S910), according to a training sequence that is in the first receive data and for assisting in channel estimation or channel equalization, an indication signal that indicates a boundary position of the training sequence, wherein the first receive data is obtained by a data transmitter (100, 310, 510, 610) by inserting, according to a boundary position of a forward error correction FEC code word, the training sequence into FEC coded data;
determining (S920) a boundary position of an FEC code word in second receive data according to the boundary position of the training sequence, wherein the second receive data is obtained after the training sequence is removed from the first receive data; and
performing (S930) FEC decoding on the FEC code word according to the boundary position of the FEC code word,
wherein the determining (S920) a boundary position of an FEC code word in second receive data according to the boundary position of the training sequence comprises:
buffering N continuous data blocks if training sequences of N cycles are inserted into one FEC code word, wherein data comprised in one data block is a part between positions indicated by adjacent indication signals in the second receive data;
performing FEC decoding on the N continuous data blocks;
checking whether a result obtained from the FEC decoding is correct; and
determining, if a check result is correct, that a boundary position of a first training sequence corresponding to the N continuous data blocks is the boundary position of the FEC code word in the second receive data, wherein the N is an integer greater than 1.

7. The frame synchronization method according to claim 6, wherein the determining (S920) a boundary position of an FEC code word in second receive data according to the boundary position of the training sequence comprises:
determining, if training sequences of one cycle are inserted into one FEC code word, that the boundary position of the training sequence is the boundary position of the FEC code word in the second receive data.

8. The frame synchronization method according to claim 6, further comprising:
selecting, if the check result is incorrect, N new continuous data blocks through window sliding, performing FEC decoding on the N new continuous data blocks and checking whether a result of the FEC decoding is correct.

9. The frame synchronization method according to claim 6, further comprising:
determining that a boundary position separated from the boundary position of the first training sequence by training sequences of M×N+N-1 cycles is a boundary position of another FEC code word in the second receive data, wherein M is an integer not less than 0.

10. The frame synchronization method according to any one of claims 6 to 9, wherein the acquiring (S910), according to a training sequence in first receive data, a boundary position of the training sequence comprises:
performing a self-correlation or cross-correlation calculation according to the training sequence, and acquiring the indication signal according to a calculation result.

## Patentansprüche

1. Datenempfänger (200, 350, 570, 650), der ein Verarbeitungsmodul (210, 360, 560, 660) und ein Decodierungsmodul (220, 370, 570, 670) umfasst, wobei:
das Verarbeitungsmodul (210, 360, 560, 660) dazu konfiguriert ist, erste Empfangsdaten zu empfangen, ein Indikationssignal, das eine Grenzposition einer Trainingssequenz angibt, gemäß der Trainingssequenz, die sich in den ersten Empfangsdaten befindet und
zum Unterstützen einer Kanalschätzung oder einer Kanalentzerrung dient, zu erfassen und zweite Empfangsdaten, die erhalten wurden, nachdem die Trainingssequenz aus den ersten Empfangsdaten entfernt wurde, und das Indikationssignal an das Decodierungsmodul (220, 370, 570, 670) auszugeben, wobei die ersten Empfangsdaten durch einen Datensender (100, 310, 510, 610) durch Einfügen, gemäß einer Grenzposition eines Codewortes einer Vorwärtsfehlerkorrektur FEC, der Trainingssequenz in FEC-codierte Daten erhalten werden; und
das Decodierungsmodul (220) dazu konfiguriert ist, eine Grenzposition eines FEC-Codewortes in den zweiten Empfangsdaten gemäß dem Indikationssignal zu bestimmen und eine FEC-Decodierung an dem FEC-Codewort gemäß der Grenzposition durchzuführen, wobei das Decodierungsmodul (220, 370, 570, 670) Folgendes umfasst:
eine Puffereinheit, die dazu konfiguriert ist, N kontinuierliche Datenblöcke zu puffern, falls Trainingssequenzen von N Zyklen in ein FEC-Codewort eingefügt werden, wobei in einem Datenblock umfasste Daten ein Teil zwischen Positionen sind, die durch benachbarte Indikationssignale in den zweiten Empfangsdaten angegeben werden;
eine Decodierungseinheit, die dazu konfiguriert ist, eine FEC-Decodierung an den N kontinuierlichen Datenblöcken durchzuführen;
eine Prüfeinheit, die dazu konfiguriert ist, zu prüfen, ob ein von der FEC-Decodierung erhaltenes Ergebnis korrekt ist; und
eine Bestimmungseinheit, die dazu konfiguriert ist, zu bestimmen, falls ein durch die Prüfeinheit erhaltenes Prüfergebnis korrekt ist, dass eine Position, die durch ein erstes Indikationssignal, das den N kontinuierlichen Datenblöcken entspricht, angegeben wird, die Grenzposition des FEC-Codewortes in den zweiten Empfangsdaten ist, wobei N eine ganze Zahl größer als 1 ist.

2. Datenempfänger (200, 350, 570, 650) nach Anspruch 1, wobei das Decodierungsmodul (220, 370, 570, 670) dazu konfiguriert ist, zu bestimmen, falls Trainingssequenzen von einem Zyklus in ein FEC-Codewort eingefügt werden, dass eine durch das Indikationssignal angegebene Position die Grenzposition des FEC-Codewortes in den zweiten Empfangsdaten ist.

3. Datenempfänger (200, 350, 570, 650) nach Anspruch 1, wobei das Decodierungsmodul (220, 370, 570, 670) ferner Folgendes umfasst:
eine Fensterverschiebungseinheit, die dazu konfiguriert ist, falls das durch die Prüfeinheit erhaltene Prüfergebnis inkorrekt ist, N neue kontinuierliche Datenblöcke durch Fensterverschieben auszuwählen und die N neuen kontinuierlichen Datenblöcke an die Decodierungseinheit auszugeben, so dass die Decodierungseinheit eine FEC-Decodierung an den N neuen kontinuierlichen Datenblöcken durchführt und die Prüfeinheit prüft, ob ein Ergebnis der FEC-Decodierung korrekt ist.

4. Datenempfänger (200, 350, 570, 650) nach Anspruch 1, wobei das Decodierungsmodul (220, 370, 570, 670) dazu konfiguriert ist, zu bestimmen, dass ein Indikationssignal, das von dem ersten Indikationssignal um M×N+N-1 Indikationssignale getrennt ist, eine Grenzposition eines anderen FEC-Codewortes in den zweiten Empfangsdaten angibt, wobei M eine ganze Zahl nicht kleiner als 0 ist.

5. Datenempfänger (200, 350, 570, 650) nach einem der Ansprüche 1 bis 4, wobei das Verarbeitungsmodul (210, 360, 560, 660) dazu konfiguriert ist, eine Selbstkorrelations-oder eine Kreuzkorrelationsberechnung gemäß der Trainingssequenz durchzuführen und das Indikationssignal gemäß einem Berechnungsergebnis zu erfassen.

6. Rahmensynchronisierungsverfahren, umfassend:
Empfangen von ersten Empfangsdaten;
Erfassen (S910), gemäß einer Trainingssequenz, die sich in den ersten Empfangsdaten befindet und zum Unterstützen einer Kanalschätzung oder einer Kanalentzerrung dient, eines Indikationssignals, das eine Grenzposition der Trainingssequenz angibt, wobei die ersten Empfangsdaten durch einen Datensender (100, 310, 510, 610) durch Einfügen, gemäß einer Grenzposition eines Codewortes einer Vorwärtsfehlerkorrektur FEC, der Trainingssequenz in FEC-codierte Daten erhalten werden;
Bestimmen (S920) einer Grenzposition eines FEC-Codewortes in zweiten Empfangsdaten gemäß der Grenzposition der Trainingssequenz, wobei die zweiten Empfangsdaten erhalten werden, nachdem die Trainingssequenz aus den ersten Empfangsdaten entfernt wurde; und
Durchführen (S930) einer FEC-Decodierung an dem FEC-Codewort gemäß der Grenzposition des FEC-Codewortes,
wobei das Bestimmen (S920) einer Grenzposition eines FEC-Codewortes in zweiten Empfangsdaten gemäß der Grenzposition der Trainingssequenz Folgendes umfasst:
Puffern von N kontinuierlichen Datenblöcken, falls Trainingssequenzen von N Zyklen in ein FEC-Codewort eingefügt werden, wobei in einem Datenblock umfasste Daten ein Teil zwischen Positionen sind, die durch benachbarte Indikationssignale in den zweiten Empfangsdaten angegeben werden;
Durchführen einer FEC-Decodierung an den N kontinuierlichen Datenblöcken;
Prüfen, ob ein von der FEC-Decodierung erhaltenes Ergebnis korrekt ist; und
Bestimmen, falls ein Prüfergebnis korrekt ist, dass eine Grenzposition einer ersten Trainingssequenz, die den N kontinuierlichen Datenblöcken entspricht, die Grenzposition des FEC-Codewortes in den zweiten Empfangsdaten ist, wobei N eine ganze Zahl größer als 1 ist.

7. Rahmensynchronisierungsverfahren nach Anspruch 6, wobei das Bestimmen (S920) einer Grenzposition eines FEC-Codewortes in zweiten Empfangsdaten gemäß der Grenzposition der Trainingssequenz Folgendes umfasst:
Bestimmen, falls Trainingssequenzen eines Zyklus in ein FEC-Codewort eingefügt werden, dass die Grenzposition der Trainingssequenz die Grenzposition des FEC-Codewortes in den zweiten Empfangsdaten ist.

8. Rahmensynchronisierungsverfahren nach Anspruch 6, ferner umfassend:
Auswählen, falls das Prüfergebnis inkorrekt ist, von N neuen kontinuierlichen Datenblöcken durch Fensterverschieben, Durchführen einer FEC-Decodierung an den N neuen kontinuierlichen Datenblöcken und Prüfen, ob ein Ergebnis der FEC-Decodierung korrekt ist.

9. Rahmensynchronisierungsverfahren nach Anspruch 6, ferner umfassend:
Bestimmen, dass eine Grenzposition, die von der Grenzposition der ersten Trainingssequenz durch Trainingssequenzen von M×N+N-1 Zyklen getrennt ist, eine Grenzposition eines anderen FEC-Codewortes in den zweiten Empfangsdaten ist, wobei M eine ganze Zahl nicht kleiner als 0 ist.

10. Rahmensynchronisierungsverfahren nach einem der Ansprüche 6 bis 9, wobei das Erfassen (S910), gemäß einer Trainingssequenz in ersten Empfangsdaten, einer Grenzposition der Trainingssequenz Folgendes umfasst:
Durchführen einer Selbstkorrelations- oder einer Kreuzkorrelationsberechnung gemäß der Trainingssequenz und Erfassen des Indikationssignales gemäß einem Berechnungsergebnis.

## Revendications

1. Récepteur de données (200, 350, 570, 650) comprenant un module de traitement (210, 360, 560, 660) et un module de décodage (220, 370, 570, 670), dans lequel:
le module de traitement (210, 360, 560, 660) est configuré pour recevoir des premières données de réception, acquérir, conformément à une séquence de formation qui est dans les premières données de réception et pour faciliter l'estimation de canal ou l'égalisation de canal, un signal d'indication qui indique une position limite de la séquence de formation, et délivrer en sortie des deuxièmes données de réception obtenues après que la séquence de formation a été retirée des premières données de réception et le signal d'indication au module de décodage (220, 370, 570, 670), les premières données de réception étant obtenues par un transmetteur de données (100, 310, 510, 610) par insertion, conformément à une position limite d'un mot code de correction d'erreur directe, FEC, de la séquence de formation dans les données codées par FEC; et
le module de décodage (220) est configuré pour déterminer une position limite d'un mot code de FEC dans les deuxièmes données de réception en fonction du signal d'indication et pour effectuer un décodage FEC sur le mot code de FEC en fonction de la position limite, le module de décodage (220, 370, 570, 670) comprenant:
une unité de tampon, configurée pour tamponner N blocs de données continus si les séquences de formation de N cycles sont insérées dans un seul mot code de FEC, les données comprises dans un bloc de données formant une partie entre des positions indiquées par des signaux d'indication adjacents dans les deuxièmes données de réception;
une unité de décodage, configurée pour effectuer un décodage FEC sur les N blocs de données continus;
une unité de vérification, configurée pour vérifier si un résultat obtenu à partir du décodage FEC est correct; et
une unité de détermination, configurée pour déterminer, si un résultat de vérification obtenu par l'unité de vérification est correct, qu'une position indiquée par un premier signal d'indication correspondant aux N blocs de données continus est la position limite du mot code de FEC dans les deuxièmes données de réception, N étant un entier supérieur à 1.

2. Récepteur de données (200, 350, 570, 650) selon la revendication 1, dans lequel le module de décodage (220, 370, 570, 670) est configuré pour déterminer, si des séquences de formation d'un cycle sont insérées dans un mot code de FEC, qu'une position indiquée par le signal d'indication est la position limite du mot code de FEC dans les deuxièmes données de réception.

3. Récepteur de données (200, 350, 570, 650) selon la revendication 1, dans lequel le module de décodage (220, 370, 570, 670) comprend en outre:
une unité de glissement de fenêtre, configurée pour sélectionner, si le résultat de vérification obtenu par l'unité de vérification est incorrect, N nouveaux blocs de données continus par un glissement de fenêtre, et délivrer en sortie les N nouveaux blocs de données continus à l'unité de décodage, de façon que l'unité de décodage effectue un décodage FEC sur les N nouveaux blocs de données continus et que l'unité de vérification vérifie si un résultat du décodage FEC est correct.

4. Récepteur de données (200, 350, 570, 650) selon la revendication 1, dans lequel le module de décodage (220, 370, 570, 670) est configuré pour déterminer qu'un signal d'indication séparé du premier signal d'indication par M×N+N-1 signaux d'indication indique une position limite d'un autre mot code de FEC dans les deuxièmes données de réception, M étant un entier non inférieur à 0.

5. Récepteur de données (200, 350, 570, 650) selon l'une quelconque des revendications 1 à 4, dans lequel le module de traitement (210, 360, 560, 660) est configuré pour effectuer un calcul par auto-corrélation ou par corrélation croisée en fonction de la séquence de formation et pour acquérir le signal d'indication en fonction du résultat du calcul.

6. Procédé de synchronisation d'image comprenant:
la réception de premières données de réception;
l'acquisition (S910), conformément à une séquence de formation qui est dans les premières données de réception et pour faciliter l'estimation de canal ou l'égalisation de canal, d'un signal d'indication qui indique une position limite de la séquence de formation, dans lequel les premières données de réception sont obtenues par un transmetteur de données (100, 310, 510, 610) par insertion, conformément à une position limite d'un mot code de correction d'erreur directe, FEC, de la séquence de formation dans les données codées par FEC;
la détermination (S920) d'une position limite d'un mot code de FEC dans des deuxièmes données de réception en fonction de la position limite de la séquence de formation, dans lequel les deuxièmes données de réception sont obtenues après que la séquence de formation a été retirée des premières données de réception; et
la mise en oeuvre (S930) d'un décodage FEC sur le mot code de FEC en fonction de la position limite du mot code de FEC,
dans lequel la détermination (S920) d'une position limite d'un mot code de FEC dans des deuxièmes données de réception en fonction de la position limite de la séquence de formation comprend:
la mise en tampon de N blocs de données continus si les séquences de formation de N cycles sont insérées dans un seul mot code de FEC, les données comprises dans un bloc de données formant une partie entre des positions indiquées par des signaux d'indication adjacents dans les deuxièmes données de réception;
la mise en oeuvre d'un décodage FEC sur les N blocs de données continus;
la vérification qu'un résultat obtenu à partir du décodage FEC est correct; et
la détermination, si un résultat de vérification est correct, qu'une position limite d'une première séquence de formation correspondant aux N blocs de données continus est la position limite du mot code de FEC dans les deuxièmes données de réception, N étant un entier supérieur à 1.

7. Procédé de synchronisation d'image selon la revendication 6, dans lequel la détermination (S920) d'une position limite d'un mot code de FEC dans des deuxièmes données de réception en fonction de la position limite de la séquence de formation comprend:
la détermination, si des séquences de formation d'un cycle sont insérées dans un mot code de FEC, que la position limite de la séquence de formation est la position limite du mot code de FEC dans les deuxièmes données de réception.

8. Procédé de synchronisation d'image selon la revendication 6, comprenant en outre:
la sélection, si le résultat de vérification est incorrect, de N nouveaux blocs de données continus par un glissement de fenêtre, la mise en oeuvre d'un décodage FEC sur les N nouveaux blocs de données continus et la vérification qu'un résultat du décodage FEC est correct.

9. Procédé de synchronisation d'image selon la revendication 6, comprenant en outre:
la détermination qu'une position limite séparée de la position limite de la première séquence de formation par des séquences de formation de M×N+N-1 cycles est une position limite d'un autre mot code de FEC dans les deuxièmes données de réception, M étant un entier non inférieur à 0.

10. Procédé de synchronisation d'image selon l'une quelconque des revendications 6 à 9, dans lequel l'acquisition (S910), en fonction d'une séquence de formation dans des premières données de réception, d'une position limite de la séquence de formation comprend:
la mise en oeuvre d'un calcul par auto-corrélation ou par corrélation croisée en fonction de la séquence de formation, et l'acquisition du signal d'indication en fonction d'un résultat du calcul.
